# EUROPÄISCHE PATENTSCHRIFT

(11) **EP 3 701 640 B1**
(45) Veröffentlichungstag und Bekanntmachung des Hinweises auf die Patenterteilung: **26.01.2022**
(21) Anmeldenummer: 18789124.7
(22) Anmeldetag: 17.10.2018
(51) Int. Cl.: H04B 7/145

(54) **REFLEKTORVORRICHTUNG ZUR KOMMUNIKATION ZWISCHEN KRAFTFAHRZEUGEN**
REFLECTING APPARATUS FOR COMMUNICATION BETWEEN TWO VEHICLES
APPAREIL DE REFLEXION POUR UNE COMMUNICATION ENTRE DEUX VEHICULES

(30) Priorität: 27.10.2017 DE 102017219397
(43) Veröffentlichungstag der Anmeldung: 02.09.2020
(73) Patentinhaber: Continental Automotive GmbH, 30165 Hannover (DE)
(72) Erfinder: SMITS, Thomas, 47638 Straelen (DE)
(74) Vertreter: Continental Corporation
(86) Internationale Anmeldenummer: PCT/EP2018/078375
(87) Internationale Veröffentlichungsnummer: WO 2019/081295

(56) Entgegenhaltungen:
- EP-A1- 2 487 665
- DE-C- 700 339
- JP-A- 2005 009 243
- KR-A- 20130 042 400
- KR-A- 20150 071 131
- US-A1- 2012 206 299

## Beschreibung

Die Erfindung betrifft eine Anordnung zur Kommunikation zwischen Kraftfahrzeugen sowie eine korrespondierende Reflektorvorrichtung.

Im Bereich Fahrzeug-zu-Fahrzeug Kommunikation (sogenanntes "Car2Car") können sich Kraftfahrzeuge in einem Frequenzband zwischen 2,5 GHz und 7,5 GHz gegenseitig Nachrichten zusenden, um z.B. die jeweils eigene Position, Geschwindigkeit und Bewegungsrichtung anderen Kraftfahrzeugen mitzuteilen. Bei nicht idealen Ausbreitungsbedingungen, insbesondere wenn die Kommunikationspartner über keinen direkten Sichtkontakt verfügen, kann es zu Einschränkungen in der Kommunikation kommen. Überdies kann bei der Übermittlung von Nachrichten eine Sendeleistung und/oder ein Sendeintervall limitiert sein. Insbesondere wenn die Kommunikationspartner sich mit hoher Geschwindigkeit aufeinander zu bewegen kann dies dazu führen, dass keine sinnvolle Kommunikation mehr möglich ist.

Bislang werden in diesem Zusammenhang sogenannte "Roadside Units" eingesetzt, die Einschränkungen in der Kommunikation verhindern sollen. Bei solchen "Roadside Units" handelt es sich um aktive Kommunikationsendpunkte, die als Relaisstation dienen. Diese sind jedoch sowohl im Hinblick auf Anschaffung und Betrieb als auch im Hinblick auf ihre Wartung vergleichsweise kostenintensiv.

Bekannt sind aus der Patentanmeldung EP 2 487 665 A1 auch Reflektorvorrichtungen, um die elektromagnetische Strahlung, die von einem Fahrzeug ausgesendet wird, sichtverbindungsunabhängig an ein anderes Fahrzeug umzuleiten.

Es ist daher die Aufgabe, die der Erfindung zugrunde liegt, eine verbesserte Anordnung zur Kommunikation zwischen Kraftfahrzeugen zu schaffen, die sowohl kostengünstig hergestellt und betrieben als auch gewartet werden kann.

Die Aufgabe wird gelöst durch die unabhängigen Patentansprüche. Vorteilhafte Ausgestaltungen sind in den Unteransprüchen gekennzeichnet.

Gemäß einem ersten Aspekt betrifft die Erfindung eine Anordnung zur Kommunikation zwischen Kraftfahrzeugen, umfassend eine Reflektorvorrichtung, die ortsfest im äußeren Bereich einer Kurve oder einer kurvenähnlichen Fahrbahn befestigt ist. Die Reflektorvorrichtung ist dabei derart ausgerichtet, dass sie von einem ersten, im Bereich eines Kurveneingangs befindlichen Kraftfahrzeugs abgegebene elektromagnetische Strahlung im Frequenzband zwischen 2,5 GHz und 7,5 GHz hin zu einem zweiten, im Bereich eines Kurvenausgangs befindlichen Kraftfahrzeug umlenkt.

In vorteilhafter Weise kann die Reflektorvorrichtung dabei rein passiv ausgeführt sein, wodurch zu einer kostengünstigen Herstellung, Betrieb und Wartung der Anordnung beigetragen wird. Insbesondere besteht die Möglichkeit, Standard-Geometrien für einen Reflektor der Reflektorvorrichtung sowie Anordnungen zur Abdeckung ähnlicher Situationen umzusetzen, um so von einem Skalierungseffekt zu profitieren.

Als Kurve oder kurvenähnliche Fahrbahn wird hier und im Folgenden ein Straßenverlauf bezeichnet, der zwischen Kurveneingang und Kurvenausgang eine Krümmung beschreibt, insbesondere genau eine Krümmung. Dies umfasst sinngemäß auch Straßenkreuzungen, Ein- bzw. Ausfahrten und ähnliche Straßenverläufe, welche bzgl. eines Geradeausfahrens eines Kraftfahrzeugs einen veränderten Lenkwinkel bzw. eine veränderte Gierrate erfordern. Insbesondere fallen darunter auch Straßenverläufe, bei denen sich die Trajektorien zweier Kraftfahrzeuge schneiden. Der Bereich des Kurveneingangs bzw. -ausgangs bezeichnet hier und im Folgenden jeweils einen Straßenabschnitt. Insbesondere sind durch den Bereich des Kurveneingangs und -ausgangs zwei Straßenabschnitte definiert, in denen zwei Kraftfahrzeuge mittels der Reflektorvorrichtung in Funkreichweite liegen, bedingt durch den Straßenverlauf jedoch nicht in Sichtkontakt zueinander stehen.

Ein tatsächlicher Punkt, an dem die Kurve mathematisch beginnt bzw. endet, ist lediglich optional in dem jeweiligen Straßenabschnitt angeordnet.

Der äußere Bereich der Kurve oder kurvenähnlichen Fahrbahn liegt auf der Seite der Fahrbahn, auf der eine an die Fahrbahn angelegte Tangente die Fahrbahn im Bereich der Kurve nicht schneidet. Die Reflektorvorrichtung ist beispielsweise abseits der Fahrbahn angeordnet oder ragt von der besagten Seite her über die Fahrbahn herein.

Die Reflektorvorrichtung ist beispielsweise tangential oder im Wesentlichen tangential zur Fahrbahn ausgerichtet.

In einer vorteilhaften Ausgestaltung gemäß dem ersten Aspekt ist die Reflektorvorrichtung an einem vorhandenen Gebäude, Mast oder Baum befestigt. In vorteilhafter Weise ermöglicht dies eine kostengünstige, flexible, praktisch uneingeschränkte Platzierung.

Die Anordnung umfasst wenigstens eine weitere Reflektorvorrichtung, wobei die Reflektorvorrichtungen verteilt oder im Verbund ortsfest im äußeren Bereich der Kurve oder der kurvenähnlichen Fahrbahn angeordnet sind.

Insbesondere ermöglicht dies eine Anpassung an die jeweilige Situation. So können bei langgezogenen Kurven mit geringer Krümmung mehrere Reflektorvorrichtungen eingesetzt werden, während bei kurzen, stark gekrümmten Kurven eine einzelne Reflektorvorrichtung genügt. Durch mehrere Reflektorvorrichtungen kann insbesondere eine Mehrfachreflektion der abgegebenen elektromagnetischen Strahlung realisiert werden.

Verteilte Reflektorvorrichtungen bezeichnen insbesondere räumlich getrennt angeordnete Reflektorvorrichtungen. Im Verbund angeordnete Reflektorvorrichtungen bezeichnen hingegen insbesondere Reflektorvorrichtungen mit einem gemeinsamen Reflektor. Der gemeinsame Reflektor kann beispielhaft eine Mehrzahl unterschiedlich gekrümmter Oberflächensegmente aufweisen, so dass besagte Mehrfachreflektion realisiert wird. Alternativ oder zusätzlich können so auch mehrere Streu- und/oder Bündelungsbereiche der abgegebenen elektromagnetischen Strahlung erreicht werden.

Die Reflektorvorrichtungen sind derart ausgerichtet befestigt, dass die von dem ersten Kraftfahrzeug abgegebene elektromagnetische Strahlung von der Reflektorvorrichtung hin zu der wenigstens einen weiteren Reflektorvorrichtung reflektiert und von dieser zu dem zweiten Kraftfahrzeug umgelenkt wird.

In vorteilhafter Weise können so insbesondere langgezogene Kurven mit geringer Krümmung überbrückt werden, um eine zuverlässige Kommunikation der Kraftfahrzeuge gewährleisten zu können.

Gemäß einem zweiten Aspekt betrifft die Erfindung eine Reflektorvorrichtung für eine Anordnung gemäß dem ersten Aspekt. Die Reflektorvorrichtung umfasst einen Reflektor, der zur Umlenkung elektromagnetischer Strahlung im Frequenzband zwischen 2,5 GHz und 7,5 GHz eingerichtet ist.

Der Reflektor weist insbesondere eine Fläche von einschließlich 0,25 m² oder größer auf. Je nach Situation kann die Fläche des Reflektors bei mehreren im Verbund angeordneten Reflektorvorrichtungen auch 5 m² oder mehr betragen. Beispielsweise erstreckt sich der Reflektor in einer Höhe von 30 cm oder höher bis hin zu einer Höhe von 150 cm.

In einer vorteilhaften Ausgestaltung gemäß dem zweiten Aspekt ist der Reflektor zur Umlenkung elektromagnetischer Strahlung im Frequenzband zwischen einschließlich 5,8 GHz und einschließlich 5,9 GHz eingerichtet. Beispielsweise ist eine Oberfläche des Reflektors hierzu für insbesondere dieses Frequenzband optimiert ausgebildet im Sinne positiver Reflexionseigenschaften. Beispielsweise ist die Oberfläche hierzu möglichst glatt ausgebildet, beispielhaft durch eine Lackbeschichtung und/oder Politur, so dass beigetragen wird eine diffuse Reflexion der elektromagnetischen Strahlung zu verhindern.

In einer weiteren vorteilhaften Ausgestaltung umfasst die Reflektorvorrichtung einen Mast oder ein Standrohr. Der Reflektor ist an dem Mast oder Standrohr befestigt.

In einer weiteren vorteilhaften Ausgestaltung gemäß dem zweiten Aspekt umfasst der Reflektor ein Blech oder besteht daraus. In vorteilhafter Weise kann so eine besonders kostengünstige, wartungsarme Anordnung realisiert werden.

In einer weiteren vorteilhaften Ausgestaltung gemäß dem zweiten Aspekt ist eine Oberfläche des Reflektors in mindestens einer Richtung konvex gewölbt. In vorteilhafter Weise ermöglicht dies eine spreizende oder richtende Wirkung beim Umlenken der abgegebenen elektromagnetischen Strahlung.

In einer weiteren vorteilhaften Ausgestaltung gemäß dem zweiten Aspekt ist eine Oberfläche des Reflektors in mindestens einer Richtung konkav gewölbt. In vorteilhafter Weise ermöglicht dies eine bündelnde oder verstärkende Wirkung beim Umlenken der abgegebenen elektromagnetischen Strahlung.

In einer weiteren vorteilhaften Ausgestaltung gemäß dem zweiten Aspekt ist eine Oberfläche des Reflektors planar.

In einer weiteren vorteilhaften Ausgestaltung gemäß dem zweiten Aspekt umfasst die Reflektorvorrichtung eine Heizung zur gezielten Temperaturanpassung des Reflektors. In vorteilhafter Weise kann so ein zuverlässiger Betrieb der Anordnung auch bei widrigen Wetterverhältnissen gewährleistet werden. Insbesondere kann die Heizung in diesem Zusammenhang eine temperaturbasierte Regelung umfassen und zum Abtauen des Reflektors eingerichtet sein. Die Heizung ist beispielsweise batteriegestützt ausgeführt. Optional kann hierbei ein Solarpanel vorgesehen sein zur Ladung der Batterie. Alternativ ist auch eine Anbindung ans Stromnetz denkbar.

In einer weiteren vorteilhaften Ausgestaltung gemäß dem zweiten Aspekt umfasst die Reflektorvorrichtung eine Wärmedämmung zum passiven Vereisungsschutz des Reflektors. Insbesondere ist die Wärmedämmung auf einer der Fahrbahn abgewandten Seite des Reflektors angeordnet. In vorteilhafter Weise kann so ein zuverlässiger Betrieb der Anordnung auch bei widrigen Wetterverhältnissen gewährleistet werden.

Ausführungsbeispiele der Erfindung sind im Folgenden anhand der schematischen Zeichnungen näher erläutert.

Es zeigen:
- Figur 1a: eine Situation eingeschränkter Fahrzeug-zu-Fahrzeug Kommunikation,
- Figur 1b: eine erfindungsgemäße Anordnung zur Kommunikation zwischen Kraftfahrzeugen;
- Figur 2a bis 2e: Ausführungsbeispiele einer erfindungsgemäßen Reflektorvorrichtung für die Anordnung gemäß Figur 1b; und
- Figuren 3a und 3b: Ausführungsbeispiele der erfindungsgemäßen Anordnung.

Elemente gleicher Konstruktion oder Funktion sind figurenübergreifend mit den gleichen Bezugszeichen versehen.

Bei der Fahrzeug-zu-Fahrzeug Kommunikation (Car2Car) bzw. Fahrzeug-zu-Infrastruktur Kommunikation (Car2x) kann neben den konventionellen Mobilfunkstandards wie z.B. 3G oder LTE ein speziell angepasstes WLAN IEEE 802.11 p zum Einsatz kommen, damit sich Fahrzeuge gegenseitig Punkt-zu-Punkt adhoc Nachrichten zusenden können. Alternativ hierzu können zu diesem Zweck auch andere Kommunikationsstandards mit leicht abweichenden Frequenzbändern wie z.B. in Amerika oder Asien eingesetzt werden. Wenn im Folgenden WLAN IEEE 802.11 p genannt wird, so ist dies entsprechend auf diese Kommunikationsstandards übertragbar.

Die Nachrichten umfassen beispielsweise die jeweils eigene Position, Geschwindigkeit und Bewegungsrichtung der Fahrzeuge. Erfolgt ein Austausch der Nachrichten zwischen den Kommunikationspartnern direkt, so kann eine Latenz äußerst gering gehalten werden, da keine Netzwerkinfrastruktur im Hintergrund konsultiert werden muss. Eine solch geringe Latenz ist essenzielle Voraussetzung für echtzeitkritische Umsetzungen von Fahrerassistenzfunktionen. Der Inhalt der Nachrichten kann dann durch Systeme zur passiven oder aktiven Kollisionsvermeidung sowie zum autonomen Fahren genutzt und beispielhaft als Sensorinformation appliziert werden.

Das WLAN nach IEEE 802.11 p verwendet ein Frequenzband im Bereich zwischen 5,8 GHz und 5,9 GHz. Insbesondere in diesem Frequenzbereich sind die Ausbreitungsbedingungen kritisch bzgl. einer Erreichbarkeit der anderen Kommunikationspartner. Hier werden nahezu direkte Sichtverhältnisse der jeweiligen Kommunikationspartner vorausgesetzt. Gemäß den Spezifikationen des WLANs nach IEEE 802.11 p dürfen dedizierte kritische Nachrichten zwar mit einer Leistung von bis zu 2 Watt emittiert werden, der überwiegende Teil der Nachrichten wird aber mit niedrigerer Leistung versendet. Darüber hinaus darf nur in einem zyklischen Intervall gesendet werden. Das heißt, zwei Fahrzeuge können per adhoc Punkt-zu-Punkt Verbindung unter Umständen erst sehr spät kommunizieren. Bedenkt man die jeweilige Geschwindigkeit mit der sich die Fahrzeuge aufeinander zu bewegen, die Ausbreitungsbedingungen und die zeitlichen Vorgaben für eine Botschaftsversendung, lassen sich sehr leicht kritische Situationen aufzeigen. Wenn die beiden Fahrzeuge untereinander keine direkten Sichtverhältnisse haben, kann eine frühe Warnung mittels Kommunikation über das WLAN nach IEEE 802.11 p Kommunikation im Zweifel nicht erfolgen; die Funktionstüchtigkeit von Fahrerassistenzsystemen wie den vorgenannten kann dadurch stark eingeschränkt sein.

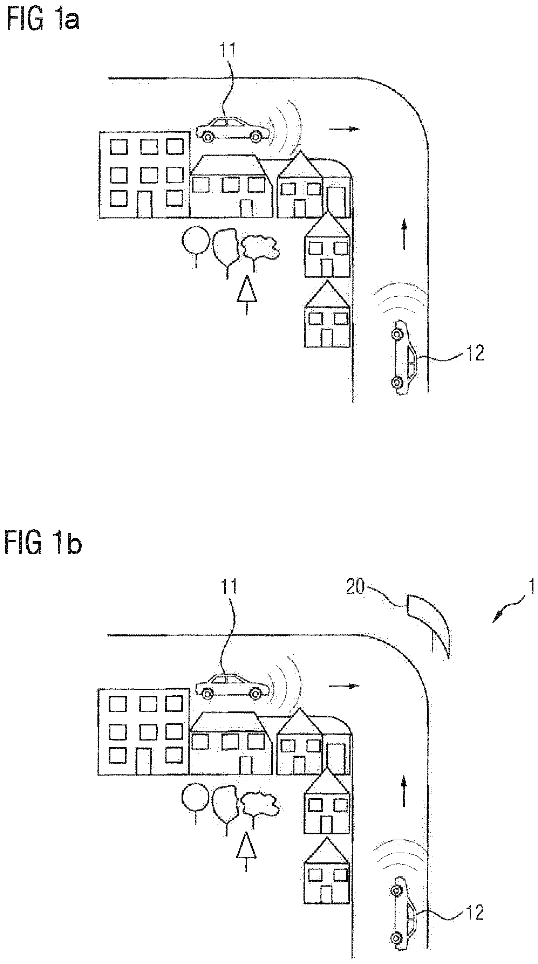

Figur 1a zeigt eine Situation, in der sich zwei Fahrzeuge 11, 12 entlang einer Straße über eine Kurve gegenseitig annähern. Durch die dargestellte Bebauung auf der kurveninneren Seite der Straße ergibt sich eine vollständige Abschattung durch die Fahrzeuge 11, 12 emittierter Signale. Im kurvenäußeren Bereich ist derweil keinerlei Bebauung oder ähnliches vorhanden, so dass durch die Fahrzeuge 11, 12 emittierte Signale ungestreut bleiben und vom jeweils anderen Fahrzeug 11, 12 nicht empfangen werden können. Ähnliche Situationen sind denkbar, in denen keinerlei bzw. reduzierte direkte Sichtverhältnisse zwischen zwei sich annähernden Fahrzeugen gegeben sind, beispielsweise wenn auf der kurveninneren Seite die Wellenausbreitung zumindest bereichsweise abgeschattet wird und auf der kurvenäußeren Seite keine weiteren Objekte vorhanden sind, die einen indirekten Kommunikationspfad durch Mehrwegeausbreitung und/oder Reflektion ermöglichen könnten. Hier sei erwähnt, dass Objekte auf der kurvenäußeren Seite die durch die Fahrzeuge 11, 12 emittierten Signale je nach Oberfläche, geometrischer Struktur oder Substanz, aus der diese bestehen, auch absorbieren könnten. Insbesondere Sträucher, Bäume etc. neigen dazu, Funkwellen zu absorbieren. Derartige Situationen können sowohl innerstädtisch, als auch in ländlichen Gebieten und Gebieten mit stark bewachsener Vegetation wie z.B. Waldgebieten auftreten.

Anhand Figur 1b ist ein Ausführungsbeispiel einer Anordnung 1 dargestellt, die in der Situation nach Figur 1a eine zuverlässige Kommunikation, insbesondere mittels WLAN nach IEEE 802.11 p, der zwei Fahrzeuge 11, 12 gewährleistet. Dies beschränkt sich nicht auf zwei Fahrzeuge, sondern gilt insbesondere im Car2Car Sinne auch für 1-zu-n bzw. n-zu-1 Kommunikation, da hier entsprechende Nachrichten per Broadcast zyklisch von sämtlichen Fahrzeugen versendet/empfangen werden.

Die Anordnung 1 umfasst eine Reflektorvorrichtung 20, die auf der kurvenäußeren Seite der Straße tangential ausgerichtet angeordnet und zur Reflektion elektromagnetischer Strahlung im Frequenzband des eingesetzten Kommunikationsstandards wie dem WLAN nach IEEE 802.11 p eingerichtet ist. Erschwerte Ausbreitungsbedingungen, die eine direkte Kommunikation zwischen den zwei Fahrzeugen 11, 12 unterbinden, können durch die geeignete Anordnung einer oder mehrerer solcher Reflektorvorrichtungen 20 zur Reflektion der Funkwellen an jeweils geeigneten Stellen umgangen werden. Im Gegensatz zu den im allgemeinen Beschreibungsteil genannten "Roadside Units" zur Überbrückung von Strecken oder lokalen Arealen mit erschwerter Kommunikation, bei denen vergleichsweise hohe Anschaffungs-, Herstellungs-, Montage-, Betriebs- und Wartungskosten auftreten etwa für Kommunikationssystem einschließlich Hardware/Software, Anbindung an Infrastruktur sowie ans Stromnetz, Strom, wechselnde Zertifikate (Sicherheits-Anforderung aus Car2XStandard), können durch die Reflektorvorrichtung 20 derartige Kosten gering gehalten und zugleich niedrige Latenzen gewährleistet werden.

Durch die Reflektorvorrichtungen 20 und deren geometrische Ausprägung, deren Oberfläche und der jeweiligen Positionierung im Raum können Funkwellen insbesondere im genannten Frequenzbereich und in an die jeweilige Situation angepasst gezielt umgelenkt werden, um eine frühzeitige Kommunikation bzw. einen frühzeitigen Nachrichten-Empfang zu ermöglichen. Die beschriebenen Reflektorvorrichtungen 20 können dabei einzeln, verteilt oder im Verbund angeordnet sein um eine jeweilige örtliche Situation bestmöglich im Sinne der Kommunikation zu optimieren.

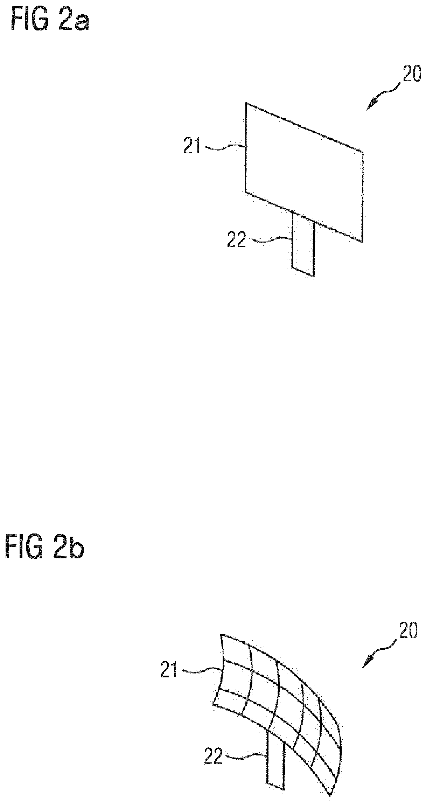

Anhand der Figuren 2a bis 2e sind Ausführungsbeispiele der Reflektorvorrichtung 20 für die Anordnung gemäß Figur 1b dargestellt.

In dem ersten Ausführungsbeispiel (Fig. 2a) weist die Reflektorvorrichtung 20 einen Reflektor 21 und ein Standrohr 22 auf. Der Reflektor 21 weist eine planare Form auf und ist an dem Standrohr 22 ähnlich eines Straßenschildes befestigt. Der Reflektor 21 kann beispielsweise als Blech ausgebildet sein.

Weiterhin kann der Reflektor 21 ausgeführt sein
- mit gitterförmiger Geometrie bzw. Struktur bzw. Oberfläche ,
- mit speziell für den Frequenzbereich 5,8 GHz - 5,9 GHz optimierter Oberfläche im Sinne positiver Reflexionseigenschaften,
- mit eingebauter Heizung (Abtau-Vorrichtung inkl. Temperaturbasierter Regelung),
- mit einer Oberfläche mit selbstreinigendem Effekt, bzw. schneller Abführung von z.B. Staub, Schmutz, Schnee, Wasser, Schmutzwasser und sonstigen Verunreinigungen, die die reflektierenden oder funktionalen Eigenschaften reduzieren würden,
- mit einer Geometrie zur Selbstreinigung bzw. zur schnellen Abführung der o.g. Verunreinigungen,
- mit passivem Vereisungsschutz wie angebrachter Wärmedämmung bzw. zur Optimierung der Wärmekapazität, Frostschutz etc.,
- mit Maßnahmen zur Vermeidung der Blendung von Verkehrsteilnehmern durch den Reflektor 21, wie durch eine Beschichtung mit mattem Lack.

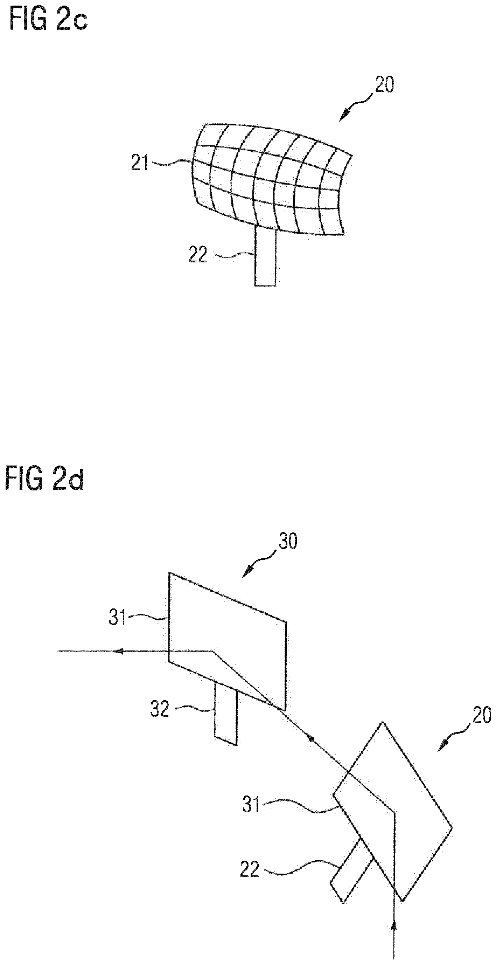

In dem zweiten Ausführungsbeispiel (Fig. 2b) und dem dritten Ausführungsbeispiel (Fig. 2c) weist der Reflektor 21 eine definierte Geometrie zur optimalen Weiterleitung bzw. Reflektion der Signale auf. So weist der Reflektor 21 in Figur 2b eine konkave Geometrie auf, die die Funkwellen des einen Fahrzeugs 11, 12 gebündelt und/oder verstärkt zu dem jeweils anderen Fahrzeug 12, 11 reflektiert. Der Reflektor 21 kann dabei in horizontaler, in vertikaler oder kombiniert in horizontaler und vertikaler Richtung konkav ausgebildet sein.

Der Reflektor 21 in Figur 2c weist hingegen eine konvexe Geometrie auf, die die Funkwellen des einen Fahrzeugs 11, 12 gespreizt und/oder gerichtet zu dem jeweils anderen Fahrzeug 12, 11 reflektiert. Der Reflektor 21 kann dabei in horizontaler, in vertikaler oder kombiniert in horizontaler und vertikaler Richtung konvex ausgebildet sein.

In dem vierten Ausführungsbeispiel (Fig. 2d) ist eine weitere Reflektorvorrichtung 30 vorgesehen. Einfallende Funkwellen des einen Fahrzeugs 11, 12 werden zunächst von der Reflektorvorrichtung 20 zu der weiteren Reflektorvorrichtung 30 umgelenkt und erst daraufhin zu dem anderen Fahrzeug 12, 11 weitergeleitet. Durch geeignete Anordnung und Ausrichtung der beiden Reflektorvorrichtungen 20, 30 wird in anderen Worten eine Mehrfachreflektion ermöglicht. Die Beiden Reflektorvorrichtungen 20, 30 sind dabei räumlich getrennt angeordnet.

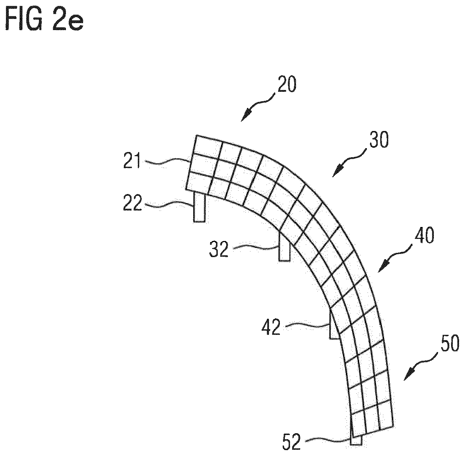

In dem fünften Ausführungsbeispiel (Fig. 2e) sind gegenüber dem vierten Ausführungsbeispiel weitere Reflektorvorrichtungen 40, 50 vorgesehen. Im Gegensatz zu dem vierten Ausführungsbeispiel sind die Reflektorvorrichtungen 20-50 dabei im Verbund angeordnet, d.h. sie weisen einen gemeinsamen Reflektor 21 auf, durch den eine Gesamtreflektion erzeugt wird. Wie in dem vierten Ausführungsbeispiel wird diese durch Mehrfachreflektion an dem gemeinsamen Reflektor 21 ermöglicht.

Reflektorvorrichtungen gemäß dem fünften Ausführungsbeispiel, eignen sich insbesondere für lang gezogene Kurven wie in einem Waldstück, um dort über einen möglichst ausgedehnten Bereich möglichst vollumfänglich an jedem Punkt eine Reflektion zu ermöglichen.

In vorteilhafter Weise können die Reflektorvorrichtungen 20 gemäß Figuren 2a-2e rein passiv ausgeführt und damit sehr kostengünstig im Hinblick auf Anschaffungs- und Wartungskosten sein. Weiterhin ist die Reflektorvorrichtung 20 theoretisch überall platzierbar. Die Reflektorvorrichtung 20 kann in Form ähnlich eines Straßenschildes aufgestellt oder an vorhandenen Strukturen wie Gebäuden, Masten oder Bäumen, etc. angebracht werden. Die Reflektorvorrichtung 20 ist darüber hinaus gezielt anpassbar auf die Situation und die örtlichen Gegebenheiten und kann einzeln, verteilt oder im Verbund angeordnet werden. Ebenso besteht die Möglichkeit Standard-Geometrien und Anordnungen zur Abdeckung ähnlicher Situationen umzusetzen und von einem weiteren Skalierungseffekt zu profitieren.

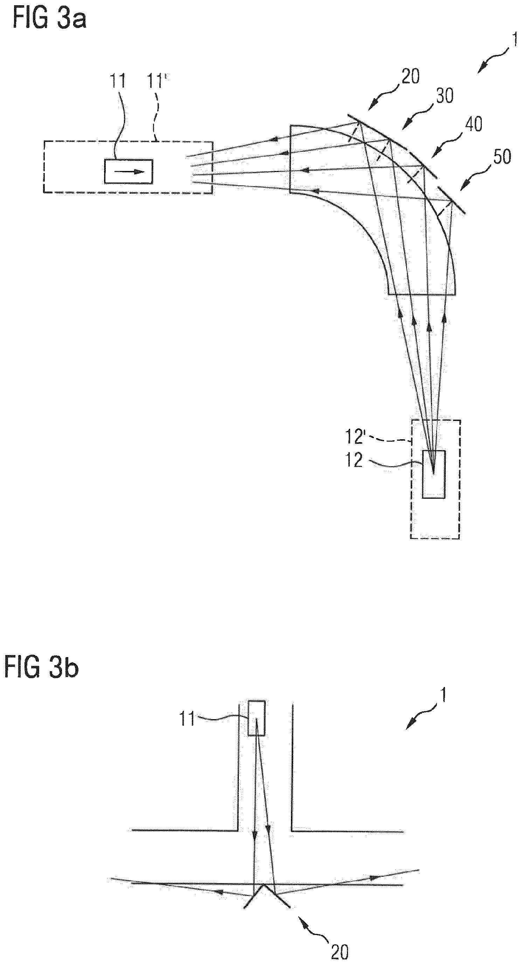

Anhand der Figuren 3a und 3b sind weitere Ausführungsbeispiele der Anordnung 1 dargestellt. So sind die Reflektorvorrichtungen 20-50 gemäß Figur 3a wie in der Zeichnung angedeutet derart ausgerichtet angeordnet, dass je Fahrzeug 11, 12 ein vorgegebener Bereich 11', 12' um das entsprechende Fahrzeug 11, 12 unter Berücksichtigung der Kommunikationsparameter der jeweiligen Situation im Hinblick auf ein Gefahrenpotential und örtlicher Gegebenheiten fokussiert wird. Der Bereich 11', 12' wird dabei entsprechend der Ausrichtung und geometrischen Form der einzelnen Reflektoren 21-51 (vgl. Fig. 2e) berücksichtigt.

Figur 3b zeigt ferner eine T-Kreuzung mit der Reflektorvorrichtung 20. Wie dargestellt schließt ein bezüglich der Figur linker Teil der Reflektorvorrichtung 20 einen ersten Winkel mit dem linken Teil der T-Kreuzung sowie einen zweiten Winkel mit dem oberen Teil der T-Kreuzung ein. Ebenso schließt ein bezüglich der Figur rechter Teil der Reflektorvorrichtung 20 einen dritten Winkel mit dem rechten Teil der T-Kreuzung sowie einen vierten Winkel mit dem oberen Teil der T-Kreuzung ein. Der erste, zweite, dritte und vierte Winkel beträgt beispielsweise jeweils zwischen 35° und 55°, insbesondere 45°. Bei dem ersten bis vierten Winkel kann es sich insbesondere um einen selben vorgegebenen Winkel handeln, den die Reflektorvorrichtung 20 oder ein Teil davon mit dem Straßenverlauf einschließt.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Anordnung (1) zur Kommunikation zwischen Kraftfahrzeugen (11, 12), umfassend eine Reflektorvorrichtung (20), die ortsfest im äußeren Bereich einer Kurve oder einer kurvenähnlichen Fahrbahn derart ausgerichtet befestigt ist, dass sie von einem ersten, im Bereich eines Kurveneingangs befindlichen Kraftfahrzeugs (11) abgegebene elektromagnetische Strahlung im Frequenzband zwischen 2,5 GHz und 7,5 GHz hin zu einem zweiten, im Bereich eines Kurvenausgangs befindlichen Kraftfahrzeug (12) umlenkt; und wobei die Anordnung (1) wenigstens eine weitere Reflektorvorrichtung (30, 40, 50) umfasst, wobei die Reflektorvorrichtungen (20, 30, 40, 50) verteilt oder im Verbund ortsfest im äußeren Bereich der Kurve oder der kurvenähnlichen Fahrbahn angeordnet und derart ausgerichtet befestigt sind, dass die von dem ersten Kraftfahrzeug (11) abgegebene elektromagnetische Strahlung von der Reflektorvorrichtung (20) hin zu der wenigstens einen weiteren Reflektorvorrichtung (30, 40, 50) reflektiert und von dieser zu dem zweiten Kraftfahrzeug (12) so umgelenkt wird, dass eine langgezogene Kurve mit geringer Krümmung überbrückt wird.

2. Anordnung (1) nach Anspruch 1, bei der die Reflektorvorrichtung (20) an einem vorhandenen Gebäude, Mast oder Baum befestigt ist.

3. Anordnung (1) nach einem der Ansprüche 1 oder 2, wobei die Reflektorvorrichtung (20) einen zur Umlenkung elektromagnetischer Strahlung im Frequenzband zwischen 2,5 GHz und 7,5 GHz eingerichteten Reflektor (21) umfasst.

4. Anordnung (1) nach Anspruch 3, wobei der Reflektor (21) zur Umlenkung elektromagnetischer Strahlung im Frequenzband zwischen einschließlich 5,8 GHz und einschließlich 5,9 GHz eingerichtet ist.

5. Anordnung (1) nach einem der Ansprüche 3 oder 4, wobei der Reflektor (21) ein Blech umfasst oder daraus besteht.

6. Anordnung (1) nach einem der Ansprüche 3 bis 5, bei der eine Oberfläche des Reflektors (21) in mindestens einer Richtung konvex gewölbt ist.

7. Anordnung (1) nach einem der Ansprüche 3 bis 6, bei der eine Oberfläche des Reflektors (21) in mindestens einer Richtung konkav gewölbt ist.

8. Anordnung (1) nach einem der Ansprüche 3 bis 5, bei der eine Oberfläche des Reflektors (21) planar ist.

9. Anordnung (1) nach einem der Ansprüche 3 bis 8, umfassend eine Heizung zur gezielten Temperaturanpassung des Reflektors (21).

10. Anordnung (1) nach einem der Ansprüche 3 bis 9, umfassend eine Wärmedämmung zum passiven Vereisungsschutz des Reflektors (21) .

## Claims

1. Arrangement (1) for communication between motor vehicles (11, 12), comprising a reflector apparatus (20) that is secured at a fixed location in the outer region of a curve or of a curve-like road in an orientation such that said reflector apparatus deflects electromagnetic radiation in the frequency band between 2.5 GHz and 7.5 GHz that is emitted by a first motor vehicle (11), situated in the region of a curve entrance, toward a second motor vehicle (12), situated in the region of a curve exit; and wherein the arrangement (1) comprises at least one further reflector apparatus (30, 40, 50), wherein the reflector apparatuses (20, 30, 40, 50) are arranged at a fixed location in the outer region of the curve or of the curve-like road in a distributed manner or in combination and are secured in an orientation such that the electromagnetic radiation emitted by the first motor vehicle (11) is reflected toward the at least one further reflector apparatus (30, 40, 50) by the reflector apparatus (20) and is deflected to the second motor vehicle (12) by said further reflector apparatus such that an elongated curve having low curvature is spanned.

2. Arrangement (1) according to Claim 1, in which the reflector apparatus (20) is secured to an existing building, mast or tree.

3. Arrangement (1) according to either of Claims 1 and 2, wherein the reflector apparatus (20) comprises a reflector (21) configured to deflect electromagnetic radiation in the frequency band between 2.5 GHz and 7.5 GHz.

4. Arrangement (1) according to Claim 3, wherein the reflector (21) is configured to deflect electromagnetic radiation in the frequency band between 5.8 GHz inclusive and 5.9 GHz inclusive.

5. Arrangement (1) according to either of Claims 3 and 4, wherein the reflector (21) comprises or consists of a metal sheet.

6. Arrangement (1) according to one of Claims 3 to 5, in which a surface of the reflector (21) is convexly curved in at least one direction.

7. Arrangement (1) according to one of Claims 3 to 6, in which a surface of the reflector (21) is concavely curved in at least one direction.

8. Arrangement (1) according to one of Claims 3 to 5, in which a surface of the reflector (21) is planar.

9. Arrangement (1) according to one of Claims 3 to 8, comprising a heater for selectively adjusting the temperature of the reflector (21).

10. Arrangement (1) according to one of Claims 3 to 9, comprising thermal insulation for passively protecting the reflector (21) against icing.

## Revendications

1. Agencement (1) de communication entre des véhicules automobiles (11, 12), comprenant un dispositif réflecteur (20) qui est fixé de manière stationnaire dans la partie extérieure d'un virage ou d'une voie de circulation similaire à un virage en étant orienté de telle sorte qu'il dévie un rayonnement électromagnétique dans la bande de fréquence comprise entre 2,5 GHz et 7,5 GHz, émis par un premier véhicule automobile (11) se trouvant au niveau d'une entrée de virage, vers un deuxième véhicule automobile (12) se trouvant au niveau d'une sortie de virage ; et l'agencement (1) comprenant au moins un autre dispositif réflecteur (30, 40, 50), les dispositifs réflecteurs (20, 30, 40, 50) étant disposés de manière stationnaire dans la partie extérieure du visage ou de la voie de circulation similaire à un virage en étant distribués ou regroupés et en étant orientés de telle sorte que le rayonnement électromagnétique émis par le premier véhicule automobile (11) est réfléchi du dispositif réflecteur (20) vers ledit au moins un autre dispositif réflecteur (30, 40, 50) et est dévié par celui-ci vers le deuxième véhicule automobile (12) de façon à couvrir un virage allongé de faible courbure.

2. Agencement (1) selon la revendication 1, dans lequel le dispositif réflecteur (20) est fixé à un immeuble, un mât ou un arbre existant.

3. Agencement (1) selon l'une quelconque des revendications 1 ou 2, dans lequel le dispositif réflecteur (20) comprend un réflecteur (21) aménagé pour dévier un rayonnement électromagnétique dans la bande de fréquence comprise entre 2,5 GHz et 7,5 GHz.

4. Agencement (1) selon la revendication 3, dans lequel le réflecteur (21) est aménagé pour dévier un rayonnement électromagnétique dans la bande de fréquence comprise entre 5,8 GHz inclus et 5,9 GHz inclus.

5. Agencement (1) selon l'une quelconque des revendications 3 ou 4, dans lequel le réflecteur (21) comprend une tôle ou est composé de celle-ci.

6. Agencement (1) selon l'une quelconque des revendications 3 à 5, dans lequel une surface du réflecteur (21) est courbée de manière convexe dans au moins une direction.

7. Agencement (1) selon l'une quelconque des revendications 3 à 6, dans lequel une surface du réflecteur (21) est courbée de manière concave dans au moins une direction.

8. Agencement (1) selon l'une quelconque des revendications 3 à 5, dans lequel une surface du réflecteur (21) est plane.

9. Agencement (1) selon l'une quelconque des revendications 3 à 8, comprenant un dispositif de chauffage pour une adaptation de température ciblée du réflecteur (21).

10. Agencement (1) selon l'une quelconque des revendications 3 à 9, comprenant une isolation thermique pour une protection antigivrage passive du réflecteur (21) .
